# EUROPÄISCHE PATENTSCHRIFT

(11) **EP 3 395 215 B1**
(45) Veröffentlichungstag und Bekanntmachung des Hinweises auf die Patenterteilung: **18.12.2019**
(21) Anmeldenummer: 18165748.7
(22) Anmeldetag: 04.04.2018
(51) Int. Cl.: A47J 31/60, A47J 31/44

(54) **FILTERSTOPFEN FÜR ROHRLEITUNGEN**
FILTER PLUG FOR PIPES
BOUCHONS FILTRES POUR TUYAUTERIE

(30) Priorität: 27.04.2017 DE 102017207083
(43) Veröffentlichungstag der Anmeldung: 31.10.2018
(73) Patentinhaber: BSH Hausgeräte GmbH, 81739 München (DE)
(72) Erfinder: Quittek, Benno, 83278 Traunstein (DE); Kaltenhauser, Alexander, 83342 Peterskirchen (DE); Siebert, Sebastian, 83278 Traunstein (DE); Brantsved, Therese, 83250 Marquartstein (DE)

(56) Entgegenhaltungen:
- DE-A1-102006 027 267
- DE-A1-102015 215 595
- DE-B3-102011 081 018

## Beschreibung

Die vorliegende Erfindung betrifft einen Filterstopfen für Rohrleitungen in einem Getränkeautomaten, insbesondere Kaffeevollautomaten sowie einen Getränkeautomaten mit einem derartigen Filterstopfen.

Bei Getränkeautomaten, insbesondere Heißgetränkeautomaten, wie beispielsweise Kaffeevollautomaten, wächst in Abhängigkeit der Wasserhärte des verwendeten Frischwassers mehr oder weniger schnell eine Kalkschicht in der Heizeinrichtung an. Im Laufe der Zeit, beispielsweise durch einen Entkalkungsvorgang, können sich Teile von dieser Kalkschicht ablösen und sich in einer Engstelle oder an einem tiefen Punkt des Rohrleitungssystems ansammeln. Funktionen der Ventile können so behindert werden.

Aus der Druckschrift DE 10 2011 081 018 B3 sind Filterstopfen für Schlauchleitungen in einem Durchlauferhitzer in Kaffeevollautomaten bekannt, die unter anderem einen zylindrischen Hohlkörper mit Durchbrüchen im Zylindermantel des Hohlkörper umfassen. Durch die Durchbrüche wird verhindert, dass Kalkstücke oder Kalkflocken mit dem Wasserstrom mit gespült werden. Die Durchbrüche und insbesondere der Zylindermantel des Hohlkörpers dienen damit als sogenannte Kalkfalle.

Um im Durchlauferhitzer eine gute Wärmeübertragung zu erzielen, ist eine Durchtrittsfläche für das Wasser mit einem geringen Durchmesser oder einem flachen Querschnitt vorteilhaft. Dies führt allerdings nachteilig zu einem dünnen Austrittsrohr. Durch die Notwendigkeit von vielen Durchbrüchen im Zylindermantel des Hohlkörpers ergibt sich dadurch jedoch nachteilig eine relativ hohe Erstreckungslänge der Kalkfalle und damit der unbeheizten Schlauchleitung. Dies führt weiter zu einem großen Bauraumanspruch des gesamten Heizungsmoduls und zu dort vorhandenen Wärmeverlusten. Eine große Erstreckungslänge des Filterstopfens mit eng toleriertem Durchmesser des Heizungsrohrs ergibt sich so nachteilig. Sind aufgrund eines erhöhten Verkalkens und vermehrten Kalkablagerungen die Durchbrüche im Zylindermantel verstopft, so ist ein Fluiddurchtritt nicht mehr möglich.

Aufgabe der vorliegenden Erfindung ist es daher, einen Filterstopfen anzugeben, der sich durch ein möglichst spätes Verstopfen des Fluidsystems auszeichnet, und gleichzeitig einen möglichst geringen Bauraum aufgrund einer möglichst geringen Erstreckung der Kalkfalle aufweist.

Diese Aufgabe wird durch einen Filterstopfen mit den Merkmalen des Anspruchs 1 sowie durch einen Getränkeautomaten mit den Merkmalen des Anspruchs 10 gelöst. Vorteilhafte Weiterbildungen der Erfindung sind Gegenstand der Unteransprüche.

Erfindungsgemäß weist ein Filterstopfen für Rohrleitungen in einem Getränkeautomaten, insbesondere einem Kaffeevollautomaten, zumindest einen ersten zylindrischen Vollkörper und einen zweiten zylindrische Vollkörper auf. Der erste zylindrische Vollkörper und der zweite zylindrische Vollkörper weisen voneinander verschiedene Durchmesser auf, wobei der erste zylindrische Vollkörper und der zweite zylindrische Vollkörper jeweils eine Mehrzahl von axialen Durchbrüchen aufweisen.

Aufgrund der zwei separaten zylindrischen Vollkörper unterschiedlichen Durchmessers erlaubt sich ein Filtern von Kalkablagerungen auf mindestens zwei verschiedenen Ebenen. Verstopft nun eine dieser Ebenen aufgrund von Kalkpartikeln, ist die Filterfunktion der zweiten Ebene weiter gegeben. Ein Fluiddurchtritt durch diese zweite Ebene bleibt weiter bestehen, so dass insgesamt die Funktionalität des Getränkeautomaten weiter vorhanden ist. Insgesamt ist das Gesamtfluidsystem des Kaffeevollautomaten durch die unterschiedlichen Ebenen weniger verstopfungsanfällig. Zudem ist das Fluidsystem bei zumindest gleicher oder sogar besserer Funktionalität wesentlich kürzer betreffend ihren Bauraum. Ein kompakter Einsatz und damit preisgünstige Heizungssysteme ermöglichen sich mit Vorteil.

Der Filterstopfen erlaubt in dem Durchlauferhitzer des Kaffeevollautomaten Kalkteilchen aus dem erhitzten Wasser effizient zu filtern, und gleichzeitig die Gefahr eines Verstopfens des Fluidsystems zu reduzieren. Ein zu schnelles Verstopfen des Gesamtfluidsystems wird so mit Vorteil so lange wie möglich hinausgezögert beziehungsweise verhindert. Realisiert wird dies auf einem möglichst geringen Bauraum, wodurch der Bauraum des gesamten Heizungssystems des Kaffeevollautomaten so gering wie möglich gehalten werden kann. Durch die kurze Erstreckungslänge zwischen Wärmeübertragung und Ende des Heizungsrohrs wird der Wärmeverlust in dieser Zone vorteilhafterweise minimiert. Kompakte Gesamtgeräte ermöglichen sich so mit Vorteil. Der Filterstopfen kann in das tragende Anschlussstück der Heizung integriert werden, wodurch sich Kosten und Komplexität reduzieren.

Das Wasser strömt von einer Heizung kommend über die Rohrleitung bis zu dem ersten zylindrischen Vollkörper und beispielsweise durch die Durchbrüche des ersten zylindrischen Vollkörpers weiter in ein weiteres Rohrleitungssystem. Sind nun beispielsweise die Durchbrüche des ersten zylindrischen Vollkörpers aufgrund von Kalkablagerungen verstopft, so kann das Wasser durch die Durchbrüche des zweiten zylindrischen Vollkörpers zum weiteren Rohrleitungssystem hindurchtreten, da sich die Durchbrüche des zweiten zylindrischen Vollkörpers in einer weiteren Ebene und insbesondere nicht in der gleichen Ebene der Durchbrüche des ersten zylindrischen Vollkörpers befinden.

Unter einem "Filterstopfen" ist insbesondere jeglicher Filterkörper zu verstehen, der in eine Rohrleitung eingeführt werden kann, und dabei eine gewisse Filterfunktion erfüllt. Vorliegend ist der Filterstopfen dafür vorgesehen, Kalkstücke oder Flocken effektiv herauszufiltern. Dabei ist nicht zwingend erforderlich, dass der Filterstopfen eine separate Komponente der Rohrleitung ist. Insbesondere kann der Filterstopfen integriert in dem Rohrleitungssystem sein.

Unter einer "Rohrleitung" ist vorliegend insbesondere jede schlauchförmige beziehungsweise rohrförmige Fluidleitung, vorzugsweise Wasserleitung, zu verstehen, die das Wasser von einer Heizung kommend zu weiteren vorgesehenen Komponenten des Getränkeautomaten weiterleitet.

Unter einem "Getränkeautomaten" ist insbesondere ein Getränke-ausgebender Automat zu verstehen, der geeignet ist, auf Knopfdruck Getränke, vorzugsweise Heißgetränke, bereitzustellen. Beispielsweise ist der Getränkeautomat ein Kaffeevollautomat oder ein Einbau-Kaffeevollautomat.

Unter einem "zylindrischen Hohlkörper" ist insbesondere ein nicht ausgefüllter beziehungsweise leerer Körper mit einer zylindrischen Form zu verstehen, der insbesondere zur Fluidleitung beziehungsweise Wasserleitung geeignet ist. Derartige zylindrische Hohlkörper dienen insbesondere als Rohrleitungssystem oder Schlauchleitu ngssystem.

Unter einem "zylindrischen Vollkörper" ist insbesondere ein ausgefüllter beziehungsweise voller Körper mit einer zylindrischen Form zu verstehen, durch den keine Fluidleitung beziehungsweise Wasserleitung möglich ist. Um durch diesen zylindrischen Vollkörper eine Wasserleitung möglich zu machen, weist dieser Durchbrüche auf, die jeweils eine rohrförmige beziehungsweise schlauchförmige Form aufweisen und eine Wasserdurchführung ermöglichen.

Unter "voneinander verschiedene Durchmesser" ist insbesondere zu verstehen, dass der erste zylindrische Vollkörper oder der zweite zylindrische Vollkörper einen größeren Durchmesser aufweisen als jeweils der andere zylindrische Vollkörper. Hierbei variieren die Durchmesser der beiden zylindrischen Vollkörper insbesondere in einem derartigen Bereich, das in dem jeweiligen Überstand Durchbrüche zur Wasserleitung integrierbar sind.

Unter "axial" ist insbesondere zu verstehen, dass sich die Erstreckungsrichtung parallel zu einer Zylinderachse der Rohrleitung erstreckt. Axial bedeutet also insbesondere entlang der axialen Richtung des Rohrleitungssystems beziehungsweise der zylindrischen Vollkörper.

Unter "Durchbrüche" ist insbesondere zu verstehen, dass diese durch den jeweiligen Vollkörper führen und eine Wasserführung durch diesen Vollkörper ermöglichen. Die Durchbrüche sind in ihrer Größe demnach derart ausgebildet, das Wasser durch den Vollkörper hindurchtreten kann. Zudem sind die Durchbrüche in ihrer Größe derart angepasst, dass Kalkablagerungen, Kalkstücke oder Flocken, an den Durchbrüchen hängen bleiben und gerade nicht durch diese Durchbrüche und damit durch den jeweiligen Vollkörper hindurchtreten können. Die Durchbrüche ermöglichen so eine Filterfunktion und halten Kalkablagerungen von den weiter stromabwärts liegend Komponenten des Kaffeevollautomaten fern.

Der Durchmesser des erfindungsgemäßen Filterstopfens ist so gewählt, dass dieser passgenau in die jeweilige Rohrleitung eingeführt werden kann. Dabei liegt der Filterstopfen mit seiner Außenfläche kraftschlüssig an der Innenwand der Rohrleitung an.

Der erfindungsgemäße Filterstopfen wird vorteilhafterweise nach einer Heizeinrichtung in eine Rohrleitung des Kaffeevollautomaten eingeführt. Im eingeführten Zustand strömt Wasser zunächst aus der Rohrleitung von der Heizung kommend zu dem Filterstopfen, und über die Durchbrüche des Filterstopfens sowie seitlich des Filterstopfens in eine weiterführende Rohrleitung, die das erhitzte Wasser zu den dafür vorgesehenen Komponenten des Kaffeevollautomaten weiterleitet.

Bei einer bevorzugten Weiterbildung der Erfindung sind die axialen Durchbrüche auf voneinander verschiedenen Ebenen angeordnet. Diese Ebenen ergeben sich insbesondere aus den unterschiedlichen Durchmessern der zylindrischen Vollkörper. Insbesondere sind die Durchbrüche des zylindrischen Vollkörpers mit größerem Durchmesser im Überstand des größeren zylindrischen Vollkörpers angeordnet.

Durch diese Anordnung der Durchbrüche in verschiedenen Ebenen ist das Fluidsystem wenig verstopfungsanfällig durch Kalkpartikel. Beispielsweise steht beim Zusetzen einer beliebigen Ebene von Durchbrüchen durch Kalkablagerungen die andere Ebene immer noch für einen Fluiddurchtritt beziehungsweise Wasserdurchtritt mit Filterwirkung zur Verfügung. Durch die Anordnung des Filtersystems in einer senkrechten Ausrichtung zur Wasserführung ermöglicht sich zudem ein kompaktes Filtersystem bei gleicher oder sogar verbesserter Funktionalität. Insbesondere minimiert sich der Wärmeverlust aufgrund der geringen Erstreckungslänge des Rohrleitungssystems für das erwärmte Wasser. Kompakte und insbesondere preisgünstige Heizungen für Kaffeevollautomaten ermöglichen sich somit Vorteil.

Bei einer weiteren bevorzugten Weiterbildung der Erfindung weist der Filterstopfen zumindest eine Mantelfläche auf, die ein Keilwellenprofil aufweist. Das Keilwellenprofil dient dabei ebenso wie die Durchbrüche als Kalkfilter. Von der Heizung erhitztes und kommendes Wasser kann zwischen einer Flanke des Keilwellenprofils zu dem weiteren Rohrleitungssystem strömen, wobei Kalkablagerungen und Partikel vor dem Keilwellenprofil hängen bleiben beziehungsweise dort hinaus gefiltert werden können.

Ein derartiger Filterstopfen mit Keilwellenprofil weist demnach drei Ebenen zur Kalkfilterung auf. Ist eine der drei Ebenen beispielsweise aufgrund von Kalkablagerungen verstopft, so dienen die weiteren Ebenen zur weiteren Wasserführung. Eine Funktionalität des Gesamtsystems ist auch bei einem Verstopfen einer oder sogar zwei Ebenen weiterhin möglich.

Im eingeführten Zustand des Filterstopfens im Rohrleitungssystem kann Wasser also in einer ersten Ebene durch Durchbrüche des ersten zylindrischen Vollkörper, in einer zweiten Ebene durch Durchbrüche des zweiten zylindrischen Vollkörper und in einer dritten Ebene über das Keilwellenprofil fließen. Dabei sind alle drei Ebenen unabhängig voneinander, so dass sich das Wasser vor dem Filterstopfen von der Heizung kommend entscheiden muss, welchen Weg es nimmt. Tritt es durch die Durchbrüche des ersten zylindrischen Vollkörpers, so tritt es nicht durch die Durchbrüche des zweiten zylindrischen Vollkörpers oder über das Keilwellenprofil. Gleiches gilt dies für das Wasser, das durch die Durchbrüche des zweiten zylindrischen Vollkörper oder über die das Keilwellenprofil fließt.

Keilwellenprofile sind dem Fachmann beispielsweise aus der Druckschrift DE 10 2011 081 018 B3 bekannt und werden daher an dieser Stelle nicht näher erörtert.

Bei einer weiteren bevorzugten Weiterbildung der Erfindung weist der Filterstopfen zumindest einen Freistich für eine Fluidströmung auf, der der Mantelfläche mit dem Keilwellenprofil direkt nachgeordnet ist. Wasser, das von der Heizung kommt, und über das Keilwellenprofil fließt, gelangt so in den Freistich, und von da in das weiterführende Rohrleitungssystem. Das in dem Freistich ankommende Wasser hat dabei die Kalkfalle beziehungsweise das Filtern der Kalkablagerungen bereits passiert. Vorzugsweise fließt auch das Wasser, das durch die Durchbrüche des ersten zylindrischen Vollkörpers oder des zweiten zylindrischen Vollkörpers fließt, direkt in den Freistich, so dass auch dieses bereits gefilterte Wasser den Freistich erreicht und von dort in die weiterführende Rohrleitung geleitet werden kann.

Freistiche sind dem Fachmann beispielsweise aus der Druckschrift DE 10 2011 081 018 B3 bekannt und werden daher an dieser Stelle nicht näher erörtert.

Bei einer weiteren bevorzugten Weiterbildung der Erfindung ist der zweite zylindrische Vollkörper dem ersten zylindrischen Vollkörper direkt nachgeordnet. Direkt nachgeordnet bedeutet dabei, dass der erste zylindrische Vollkörper und der zweite zylindrische Vollkörper ohne Übergang aneinander angrenzenden. Dabei ist nicht zwangsläufig notwendig, dass der erste zylindrische Vollkörper und der zweite zylindrische Vollkörper separate Körper sind. Beispielsweise sind der erste zylindrische Vollkörper und der zweite zylindrische Vollkörper einstückig ausgebildet. Der erste zylindrische Vollkörper ist dabei dem zweiten zylindrischen Vollkörper vorgeordnet und weist einen geringeren Durchmesser auf. Der erste zylindrische Vollkörper und der zweite zylindrische Vollkörper sind also entsprechend einer liegenden Treppenstufenform ausgebildet. Eine Kalkfilterung auf unterschiedlichen Ebenen mit geringer Ausdehnung in axialer Richtung ermöglicht sich so mit Vorteil.

Bei einer weiteren bevorzugten Weiterbildung der Erfindung umfasst der zweite zylindrische Vollkörper die Mantelfläche mit Keilwellenprofil. Der zweite zylindrische Vollkörper weist in diesem Fall also zwei separat und unterschiedlich ausgebildete Kalkfilterungssysteme auf, nämlich die Durchbrüche sowie das Keilwellenprofil. Dabei sind diese separaten Kalkfilterungssysteme auf verschiedenen Ebenen des zweiten zylindrischen Vollkörper ausgebildet, so dass bei einem Verstopfen eines der Kalkfilterungssysteme zumindest das andere Kalkfilterungssystem weiter funktionsfähig ist. Die Gefahr eines Verstopfens durch Kalkablagerungen des Gesamtleitungssystems reduziert sich so mit Vorteil.

Bei einer alternativen Weiterbildung der Erfindung ist die Mantelfläche mit Keilwellenprofil dem zweiten zylindrischen Vollkörper direkt nachgeordnet. In diesem Fall weist der zweite zylindrische Vollkörper also nicht das Keilwellenprofil auf, sondern das Keilwellenprofil und der zweite zylindrische Vollkörper sind separate Komponenten des Systems. Dabei sind diese separaten Komponenten direkt nacheinander angeordnet, also ohne Abstand und direkt aneinander angrenzend.

Bei einer weiteren bevorzugten Weiterbildung der Erfindung dienen die Durchbrüche des ersten zylindrischen Vollkörpers und des zweiten zylindrischen Vollkörpers als Sieblöcher für Fremdkörper und ähnliches, insbesondere Kalkablagerungen. Durch die Durchbrüche kann so eine Filterung von unerwünschten Kalkablagerungen beziehungsweise Kalkpartikeln erfolgen. Diese Kalkablagerungen beziehungsweise Kalkpartikeln werden durch die Durchbrüche vor den weiterführenden Rohrleitungen herausgefiltert und können mit dem erhitzten Wasser nicht zu weiteren Komponenten des Kaffeevollautomaten strömen.

Bei einer weiteren bevorzugten Weiterbildung der Erfindung sind die Durchbrüche des ersten zylindrischen Vollkörpers zu den Durchbrüchen des zweiten zylindrischen Vollkörpers in einer parallel zur Zylinderachse und in einer senkrecht zur Zylinderachse ausgerichteten Ebene versetzt zueinander angeordnet.

"Versetzt zu einer parallel zur Zylinderachse ausgerichteten Ebene" bedeutet insbesondere, dass die Durchbrüche des ersten zylindrischen Vollkörpers parallel zu den Durchbrüchen des zweiten zylindrischen Vollkörpers ausgerichtet sind, wobei diese in einem Abstand zueinander angeordnet sind. Gleiches gilt für "versetzt zu einer senkrecht zur Zylinderachse ausgerichteten Ebene". Hier sind die Durchbrüche des ersten zylindrischen Vollkörpers parallel zu den Durchbrüchen des zweiten zylindrischen Vollkörper ausgerichtet, jedoch senkrecht zur Zylinderachse und senkrecht in einem Abstand zueinander.

Durch diese versetzte Anordnung der unterschiedlichen Durchbrüche ermöglicht sich ein Kalkfiltersystem, das sich auf verschiedene Ebenen erstreckt, so dass die Gefahr eines Verstopfens und damit die Gefahr einer Beeinträchtigung der Funktionalität des Rohrleitungssystems reduziert werden kann.

Bei einer weiteren bevorzugten Weiterbildung der Erfindung sind Durchmesser der Durchbrüche des ersten zylindrischen Vollkörpers und/oder des zweiten zylindrischen Vollkörpers kleiner als ein kleinster Durchmesser des Filterstopfens und/oder des Getränkeautomaten.

Erfindungsgemäß ist weiter ein Getränkeautomat, insbesondere ein Kaffeevollautomat, angegeben, der einen wie oben beschriebenen Filterstopfen aufweist beziehungsweise umfasst.

Weitere Vorteile, vorteilhafte Ausführungsformen und Weiterbildungen des Filterstopfens oder des Getränkeautomats ergeben sich aus den im Folgenden in Verbindung mit den Figuren beschriebenen Ausführungsformen. Es zeigen
- Figur 1: eine perspektivische Ansicht eines Ausführungsbeispiels eines erfindungsgemäßen Filterstopfens,
- Figur 2: einen schematischen Querschnitt des Filterstopfens des Ausführungsbeispiels der Figur 1, und
- Figuren 3A bis 3D: jeweils schematische Ansichten eines Ausführungsbeispiels eines erfindungsgemäßen Filterstopfens.

In den Ausführungsbeispielen und Figuren können gleiche oder gleich wirkende Bestandteile jeweils mit den gleichen Bezugszeichen versehen sein. Die dargestellten Bestandteile und deren Größenverhältnisse zueinander sind grundsätzlich nicht als maßstabsgerecht anzusehen. Vielmehr können einzelne Elemente wie beispielsweise Schichten, Teile, Elemente, Komponenten und Bereiche zur besseren Darstellbarkeit und/oder zum besseren Verständnis übertrieben dick oder groß dimensioniert dargestellt sein.

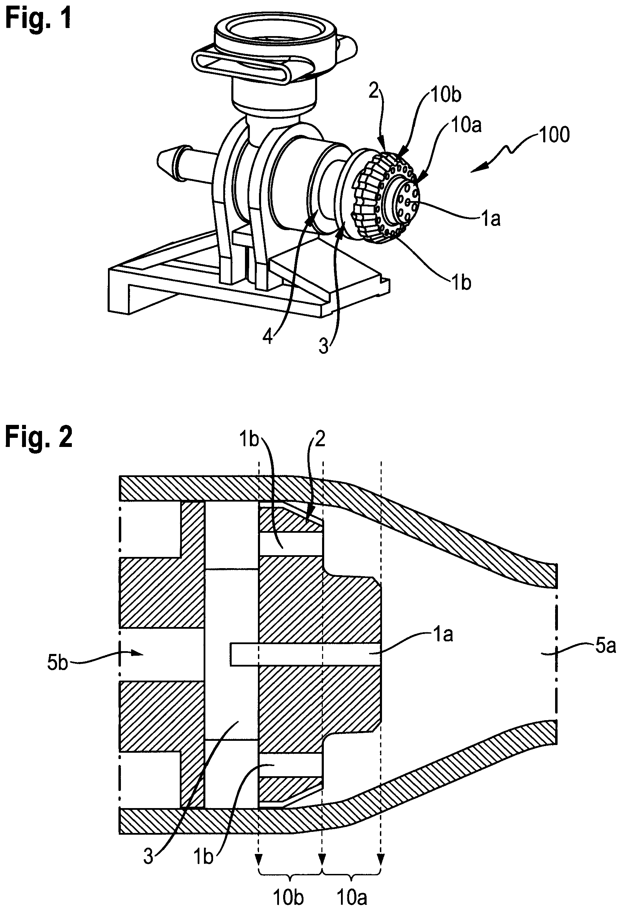

Figur 1 zeigt eine schematische Ansicht eines Filterstopfens 100 in einem Durchlauferhitzer für einen Kaffeevollautomaten. Auf den Filterstopfen 100 ist eine Rohrleitung aufsteckbar (nicht dargestellt). Der Filterstopfen 100 dient als Kalkfalle oder Filtersieb für Kalkpartikel und Kalkablagerungen oder ähnliches.

Der Filterstopfen 100 weist einen ersten zylindrischen Vollkörper 10a und einen zweiten zylindrischen Vollkörper 10b auf, die direkt nacheinander und aneinander angrenzend angeordnet sind. Dabei weist der erste zylindrische Vollkörper 10a einen geringeren Durchmesser auf als der zweite zylindrische Vollkörper 10b.

Der erste zylindrische Vollkörper 10a weist vorzugsweise achssymmetrisch angeordnete, axiale Durchbrüche 1a, insbesondere Sieblöcher auf, durch die ein von dem Durchlauferhitzer erwärmtes Wasser strömen beziehungsweise fließen kann. Kalkablagerungen und Kalkpartikel können aufgrund ihrer Größe und Ausdehnung diese Durchbrüche 1a nicht passieren, bleiben daher an dem ersten zylindrischen Vollkörper 10a hängen und fließen nicht im Strom des erwärmten Wassers weiter.

Auch der zweite zylindrische Vollkörper 10b weist vorzugsweise achssymmetrisch angeordnete, axiale Durchbrüche 1b, insbesondere Sieblöcher auf, durch die ein von dem Durchlauferhitzer erwärmtes Wasser strömen beziehungsweise fließen kann. Kalkablagerungen und Kalkpartikel können aufgrund ihrer Größe und Ausdehnung diese Durchbrüche 1b ebenfalls nicht passieren, bleiben daher an dem zweiten zylindrischen Vollkörper 10b hängen und fließen nicht im Strom des erwärmten Wassers weiter.

Dabei liegen die Durchbrüche 1a des ersten zylindrischen Vollkörpers 10a und die Durchbrüche 1b des zweiten zylindrischen Vollkörpers 10b auf zwei voneinander unterschiedlichen Ebenen. Dies wird durch die unterschiedlichen Durchmesser der zwei Vollkörper 10a, 10b realisiert. Aufgrund der unterschiedlichen Durchmesser überragt der zweite zylindrische Vollkörper 10b den ersten zylindrischen Vollkörper 10a rotationssymmetrisch um die Zylinderachsen der beiden Vollkörper 10a, 10b. Die Zylinderachsen liegen dabei übereinander und sind dadurch identisch. In dem überragenden Bereich des zweiten Vollkörpers 10b sind die Durchbrüche 1b angeordnet. Vom Durchlauferhitzer erwärmtes Wasser kann damit durch die Durchbrüche 1a des ersten zylindrischen Vollkörpers 10a und/oder durch die Durchbrüche 1b des zweiten zylindrischen Vollkörpers 10b fließen.

Der zweite zylindrische Vollkörper 10b weist an seiner Mantelfläche ein Keilwellenprofil 2 auf, das ebenfalls rotationssymetrisch beziehungsweise achssymmetrisch angeordnet beziehungsweise ausgebildet ist. Dadurch ergeben sich mit Vorteil drei unterschiedliche Ebenen des Filterstopfens 100, an denen Kalkpartikel und Kalkablagerungen aus dem erwärmten Wasser herausgefiltert werden. Das erwärmte Wasser kann dabei seinen Weg durch die Durchbrüche 1a des ersten zylindrischen Vollkörpers 10a, durch die Durchbrüche 1b des zweiten zylindrischen Vollkörpers 10b und/oder über das Keilwellenprofil 2 nehmen. Sind keine Wege des Wassers verkalkt, sind alle drei Wege für das erwärmte Wasser offen und so gleichzeitig möglich.

Dem zweiten zylindrischen Vollkörper in Wasserströmung direkt angrenzend nachfolgend ist ein Freistich 3 für die Fluidströmung beziehungsweise Wasserströmung und direkt nachfolgend eine Nut für einen dichtenden O-Ring 4 angeordnet. Das über den Freistich 3 kommende Wasser kann über eine weiterführende Rohrleitung zu den vorgesehenen weiteren Komponenten des Kaffeevollautomaten geführt werden. Dies ist in Verbindung mit den nachfolgenden Figuren dargestellt.

Durch das Filtern der Kalkpartikel und Kalkablagerungen über drei unterschiedliche Ebenen ist das Gesamt-Fluidsystem weitaus weniger verstopfungsanfällig durch Kalkpartikel. Insbesondere stehen bei einem Zusetzen einer beliebigen Ebene von Durchbrüchen die anderen Ebenen weiterhin für einen Fluiddurchtritt mit Filterwirkung zur Verfügung. Zudem ist das System bei sogar besserer Funktion wesentlich kürzer ausgebildet, wodurch der Einsatz in kompakte und dadurch preisgünstigen Durchlauferhitzern oder Heizungen möglich ist. Durch eine kurze Erstreckungslänge zwischen Wärmeübertragung und Ende des Heizrohrs wird vorteilhafterweise der Wärmeverlust in diesem Bereich minimiert. Weiter kann der Filterstopfen in ein tragendes Anschlussstück des Durchlauferhitzers oder der Heizung integriert werden. Dadurch werden mit Vorteil Kosten und Komplexität gesenkt.

Figur 2 zeigt einen schematischen Querschnitt durch die Zylinderachse beispielsweise eines Filterstopfens des Ausführungsbeispiels der Figur 1. Erwärmtes Wasser kommt aus einer Rohrleitung 5a zu dem ersten zylindrischen Vollkörper 10a und kann diesen durch dessen Durchbrüche 1a passieren. Zudem kann das erwärmte Wasser in einem Bereich außerhalb des ersten zylindrischen Vollkörpers 10a auf den zweiten zylindrischen Vollkörper 10b treffen, und diesen durch dessen Durchbrüche 1b und/oder über dessen Keilwellenprofil 2 an der Mantelfläche passieren. Das durch die Durchbrüche 1a, 1b oder über das Keilwellenprofil 2 geleitete Wasser gelangt anschließend über den Freistich 3 in die weiterführende Rohrleitung 5b. Kalkpartikel werden aufgrund ihrer Größe von den Durchbrüchen 1a, 1b oder von Flanken des Keilwellenprofils 2 aus dem fließenden Wasser herausgefiltert beziehungsweise herausgesiebt.

Im Übrigen stimmt das Ausführungsbeispiel der Figur 2 mit dem Ausführungsbeispiel der Figur 1 überein.

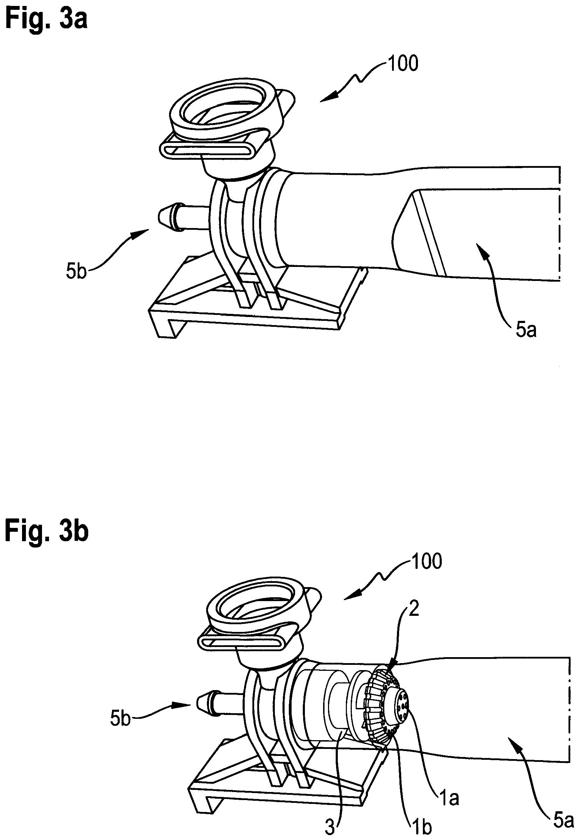

Figur 3a zeigt eine schematische Ansicht eines Filterstopfens 100, der an einer Rohleitung 5a angebracht beziehungsweise darin eingebracht ist. Der Filterstopfen 100, der als Kalkfalle dient, ist dabei vollständig von der Rohrleitung umschlossen und derart abgedichtet, dass kein Fluid beziehungsweise kein Wasser aus der Rohrleitung austritt. Dem Filterstopfen 100 in Flussrichtung nachfolgend ist die weiterführende Rohrleitung 5b angeordnet, sodass das Wasser, das den Filterstopfen passiert, über die weitere Rohrleitung 5b zu den vorgesehenen Komponenten des Kaffeevollautomaten gelangen kann.

Figur 3b zeigt den Filterstopfen 100 mit Rohrleitung 5b des Ausführungsbeispiels der Figur 3a, bei dem die Rohrleitung 5a zur Verdeutlichung des Filterstopfens 100 transparent dargestellt ist. Wasser, das von dem Durchlauferhitzer oder von der Heizung über die Rohrleitung 5a zum Filterstopfen 100 gelangt, kann durch die Durchbrüche 1a, 1b und/oder über das Keilwellenprofil 2 zum Freistich 3 und von dort zur weiterführenden Rohrleitung 5b gelangen. Das Wasser wird hierbei wie bei dem Ausführungsbeispiel der vorhergehenden Figuren an drei Ebenen bezüglich ihrer Kalkpartikel und Kalkablagerungen gefiltert, nämlich den Durchbrüchen 1a des ersten zylindrischen Vollkörpers, ausgebildet als Sieblöcher, den Durchbrüchen 1b des zweiten zylindrischen Vollkörpers, ausgebildet als Sieblöcher, und den Flanken des Keilwellenprofils 2.

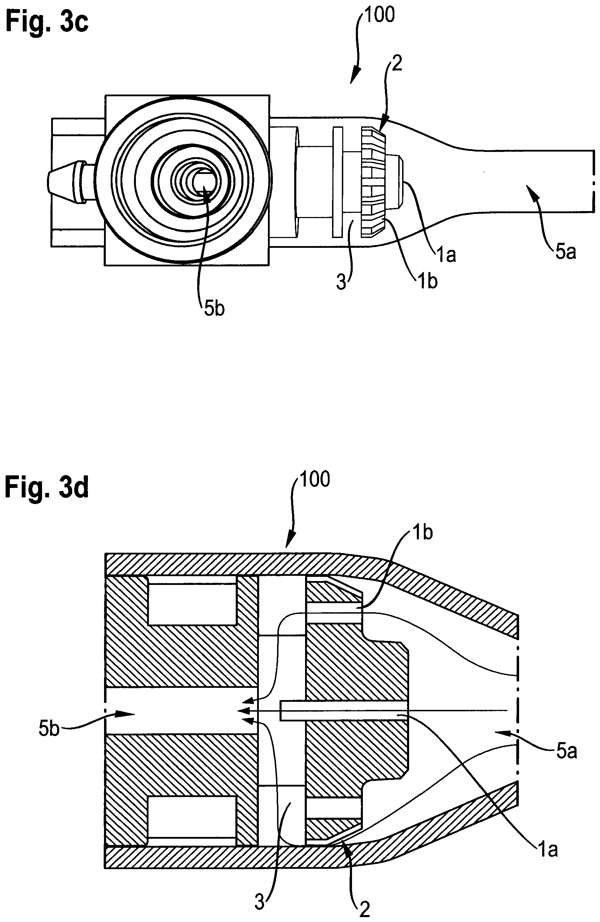

Figur 3c zeigt den Filterstopfen 100 mit transparenter Rohrleitung 5a in einer Aufsicht. Hier treten die verschiedenen Ebenen der Kalkfilterung deutlich hervor. Die erste Ebene mit Durchbrüchen 1a, die zweite Ebene mit Durchbrüchen 1b, die der ersten Ebene in Flussrichtung nachgeordnet ist, und die dritte Ebene mit Keilwellenprofil 2, die parallel zur zweiten Ebene ausgebildet ist, ermöglichen eine effiziente und verstopfungsresistente Kalkfalle.

In Figur 3d sind die möglichen Pfade des erhitzen Wassers durch den Filterstopfen 100 von der Rohrleitung 5a kommend detailliert dargestellt. Das Wasser kann durch die Durchbrüche 1a des ersten zylindrischen Vollkörpers, durch die Durchbrüche 1b des zweiten zylindrischen Vollkörpers und/oder über die Flanken des Keilwellenprofils 2, und über den Freistich 3 in die weiterführende Rohrleitung 5b gelangen (jeweils mit Pfeil dargestellt).

Im Übrigen stimmt das Ausführungsbeispiel der Figuren 3a bis 3d mit dem Ausführungsbeispiel der Figuren 1 und 2 überein.

Die Erläuterung des erfindungsgemäßen Filterstopfens oder des Getränkeautomaten anhand der oben beschriebenen Ausführungsbeispiele ist nicht als Beschränkung der Erfindung auf diese zu betrachten. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder den Ausführungsbeispielen angegeben ist.

### Bezugszeichenliste

- 100: Filterstopfen
- 10a: erster zylindrischer Vollkörper
- 10b: zweiter zylindrischer Vollkörper
- 1a, 1b: Durchbrüche
- 2: Keilwellenprofil
- 3: Freistich
- 4: O-Ring
- 5a: Rohrleitung
- 5b: weiterführende Rohrleitung

## Patentansprüche

1. Filterstopfen (100) für Rohrleitungen (5a) in einem Getränkeautomaten, insbesondere Kaffeevollautomaten, mit zumindest einem ersten zylindrischen Vollkörper (10a) und einem zweiten zylindrischen Vollkörper (10b), die voneinander verschiedene Durchmesser aufweisen, wobei der erste zylindrische Vollkörper (10a) und der zweite zylindrische Vollkörper (10b) jeweils eine Mehrzahl von axialen Durchbrüchen (1a, 1b) aufweisen.

2. Filterstopfen nach einem der vorhergehenden Ansprüche, wobei die axialen Durchbrüche (1a, 1b) auf voneinander verschiedenen Ebenen angeordnet sind.

3. Filterstopfen nach einem der vorhergehenden Ansprüche, mit zumindest einer Mantelfläche, die ein Keilwellenprofil (2) aufweist.

4. Filterstopfen nach einem der vorhergehenden Ansprüche, mit zumindest einem Freistich (3) für eine Fluidströmung, der der Mantelfläche mit dem Keilwellenprofil (2) direkt nachgeordnet ist.

5. Filterstopfen nach einem der vorhergehenden Ansprüche, wobei der zweite zylindrische Vollkörper (10b) dem ersten zylindrischen Vollkörper (10a) direkt nachgeordnet ist.

6. Filterstopfen nach Anspruch 5 unter Rückbezug auf Anspruch 3, wobei der zweite zylindrische Vollkörper (10b) die Mantelfläche mit Keilwellenprofil (2) umfasst.

7. Filterstopfen nach Anspruch 5 unter Rückbezug auf Anspruch 3, wobei die Mantelfläche mit Keilwellenprofil (2) dem zweiten zylindrischen Vollkörper (10b) direkt nachgeordnet ist.

8. Filterstopfen nach einem der vorhergehenden Ansprüche, wobei die Durchbrüche (1a, 1b) als Sieblöcher für Kalkablagerungen dienen.

9. Filterstopfen nach einem der vorhergehenden Ansprüche, wobei die Durchbrüche (1a) des ersten zylindrischen Vollkörpers (10a) zu den Durchbrüchen (1b) des zweiten zylindrischen Vollkörpers (10b) in einer parallel zur Zylinderachse und in einer senkrecht zur Zylinderachse ausgerichteten Ebene versetzt zueinander angeordnet sind.

10. Getränkeautomat, insbesondere Kaffeevollautomat, mit einem Filterstopfen (100) nach einem der vorhergehenden Ansprüche.

## Claims

1. Filter plug (100) for pipelines (5a) in an automatic beverage machine, in particular fully-automatic coffee machine, with at least one first cylindrical solid body (10a) and one second cylindrical solid body (10b), which have diameters which differ from one another, wherein the first cylindrical solid body (10a) and the second cylindrical solid body (10b) each have a plurality of axial apertures (1a, 1b).

2. Filter plug according to one of the preceding claims, wherein
the axial apertures (1a, 1b) are arranged on planes which differ from one another.

3. Filter plug according to one of the preceding claims, with
at least one peripheral surface, which has a spline shaft profile (2).

4. Filter plug according to one of the preceding claims, with
at least one undercut (3) for a fluid flow, which is immediately downstream of the peripheral surface with the spline shaft profile (2).

5. Filter plug according to one of the preceding claims, wherein
the second cylindrical solid body (10b) is immediately downstream of the first cylindrical solid body (10a).

6. Filter plug according to claim 5, with reference to claim 3, wherein
the second cylindrical solid body (10b) comprises the peripheral surface with spline shaft profile (2).

7. Filter plug according to claim 5, with reference to claim 3, wherein
the peripheral surface with spline shaft profile (2) is immediately downstream of the second cylindrical solid body (10b).

8. Filter plug according to one of the preceding claims, wherein
the apertures (1a, 1b) serve as sieve holes for calcium deposits.

9. Filter plug according to one of the preceding claims, wherein
the apertures (1a) of the first cylindrical solid body (10a) are arranged offset from one another in relation to the apertures (1b) of the second cylindrical solid body (10b) in a plane oriented in parallel with the cylinder axis and in a plane oriented perpendicular to the cylinder axis.

10. Automatic beverage machine, in particular fully-automatic coffee machine, with a filter plug (100) according to one of the preceding claims.

## Revendications

1. Bouchon-filtre (100) pour des tuyauteries (5a) dans un distributeur automatique de boissons, notamment une machine à café automatique, comprenant au moins un premier corps plein cylindrique (10a) et un second corps plein cylindrique (10b) ayant des diamètres différents l'un de l'autre, dans lequel le premier corps plein cylindrique (10a) et le second corps plein cylindrique (10b) comportent respectivement une pluralité de percées axiales (1a, 1b).

2. Bouchon-filtre selon l'une des revendications précédentes, dans lequel les percées axiales (1a, 1b) sont disposées à des niveaux différents l'une de l'autre.

3. Bouchon-filtre selon l'une des revendications précédentes, comprenant au moins une surface d'enveloppe, qui comprend un profil d'arbre cannelé (2).

4. Bouchon-filtre selon l'une des revendications précédentes, comprenant au moins une rainure de dégagement (3) pour l'écoulement du fluide, qui est disposée directement en aval de la surface d'enveloppe dotée du profil d'arbre cannelé (2).

5. Bouchon-filtre selon l'une des revendications précédentes, dans lequel le second corps plein cylindrique (10b) est disposé directement en aval du premier corps plein cylindrique (10a).

6. Bouchon-filtre selon la revendication 5 lorsqu'elle dépend de la revendication 3, dans lequel le second corps plein cylindrique (10b) comprend la surface d'enveloppe dotée d'un profil d'arbre cannelé (2).

7. Bouchon-filtre selon la revendication 5 lorsqu'elle dépend de la revendication 3, dans lequel la surface d'enveloppe dotée d'un profil d'arbre cannelé (2) est disposée directement en aval du second corps plein cylindrique (10b).

8. Bouchon-filtre selon l'une des revendications précédentes, dans lequel les percées (1a, 1b) servent de trous de tamis pour des dépôts calcaires.

9. Bouchon-filtre selon l'une des revendications précédentes, dans lequel les percées (1a) du premier corps plein cylindrique (10a) sont disposées respectivement de façon décalée par rapport aux percées (1b) du second corps plein cylindrique (10b) dans un plan parallèle à l'axe du cylindre et dans un plan perpendiculaire à l'axe du cylindre.

10. Distributeur automatique de boissons, en particulier machine à café, comprenant un bouchon-filtre (100) selon l'une des revendications précédentes.
